(19) Europäisches Patentamt
European Patent Office
Office européen des brevets

(11) **EP 3 865 918 A2**

(12) **EUROPEAN PATENT APPLICATION**

(43) Date of publication:
**18.08.2021 Bulletin 2021/33**

(51) Int Cl.:
***G02B 3/14*** *(2006.01)* ***G02C 7/08*** *(2006.01)*

(21) Application number: **21152790.8**

(22) Date of filing: **21.01.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.01.2020 EP 20152960**
**22.12.2020 DE 102020134753**

(71) Applicant: **Optotune AG**
**8953 Dietikon (CH)**

(72) Inventors:
• **PATSCHEIDER, Roman**
**8400 Winterthur (CH)**

• **LANING, Chris**
**5210 Windisch (CH)**
• **Herbestreit, Erik**
**8105 Regensdorf (CH)**
• **ASCHWANDEN, Manuel**
**6319 Allenwinden (CH)**
• **NIEDERER, David Andreas**
**5024 Küttigen (CH)**
• **SMOLKA, Stephan**
**8006 Zürich (CH)**

(74) Representative: **Schulz Junghans**
**Patentanwälte PartGmbB**
**Großbeerenstraße 71**
**10963 Berlin (DE)**

(54) **MEMBRANE-BASED LENS WITH ENHANCED AND ADJUSTABLE OPTICAL PROPERTIES**

(57)     The invention relates to an adjustable lens (1) configured to adjust optical properties of the lens (1), the optical properties comprising at least an optical sphere power, an optical cylinder and/or an optical prism, comprising at least the following components:
- A container (4), comprising a container volume (VC) with at least a first lens volume (V1) filled with a first liquid (L1),
- A container frame (FC), comprising at least a first frame member (11) laterally enclosing the first lens volume (L1) circumferentially, wherein the first frame member (LI) can be adjusted with respect to a height of the first frame member (11) along an optical axis (100) of the lens (1), wherein the height of the first frame member (11) can be adjusted so it varies around a perimeter of the first frame member (11),
- A first transparent membrane (10) arranged on a first side of the container (4) forming a first refractive surface of the lens (1), wherein the first membrane (11) delimits the container volume (VC) and the first lens volume (VI),
- A second membrane (20) arranged on a second side of the container (4) arranged opposite the first side of the container (4) forming a second refractive surface of the lens (1), wherein the second membrane (20) delimits the container volume (VC),
- A first actuator system (13) configured and arranged for adjusting the first frame member (11) along the optical axis (100) to different heights (101), particularly simultaneously along the perimeter of the first frame member (11), such that the container frame (FC) exhibits a varying extension along the optical axis (100) along a perimeter of the container frame (FC), wherein upon actuation by the first actuator system (13) the first refractive surface and/or the second refractive surface is/are adjusted such that one or more optical properties of the lens (1) are adjusted.

Fig. 1

EP 3 865 918 A2

## Description

The invention relates to an adjustable lens configured to adjust optical properties of the lens, the optical properties comprising at least an optical sphere power, an optical cylinder and/or an optical prism.

Ophthalmic lenses are known in the art. However, most of the ophthalmic lenses are made of a rigid material, which does not allow any adjustment of the optical properties. To remedy this deficiency, ophthalmic lenses have been proposed that comprise an adjustable membrane forming a refractive surface (cf. WO 2013/143630). The membrane shape can be adjusted in order to adjust for the desired optical properties. The desired optical properties for example can be prescribed by a prescription. While for some instance such adjustable lenses are sufficient, there are many instances in which these lenses are not suitable.

For example, when the lens shaping element to which the membrane is typically attached and that provides the limitation with respect to the deformable portion of the membrane is non-round, the optical properties might be adjustable as desired. Other problems are present in the art that are elaborated and solved by the lens according to the invention.

The object is achieved by the device having the features of claim 1. Advantageous embodiments are described in the subclaims.

According to claim 1 an adjustable lens is configured to adjust optical properties of the lens, the optical properties comprising at least an optical sphere power, an optical cylinder power and/or axis and/or an optical prism power and/or axis, particularly according to a prescription, comprising at least the following components:

- A container, comprising a container volume with at least a first lens volume filled with a first liquid,

- A container frame, comprising at least a first frame member laterally, particularly in a plane orthogonal to an optical axis of the lens enclosing, particularly in a liquid-tight manner the first lens volume circumferentially, wherein the first frame member can be adjusted with respect to a height of the first frame member along an optical axis of the lens, wherein the height of the first frame member can be adjusted, e.g. tilted or deformed so it varies around a perimeter of the first frame member, in particular the height can be constant along the perimeter of the first frame member,

- A first transparent, particularly elastically deformable membrane arranged on a first side of the container forming a first refractive surface of the lens, wherein the first membrane covers the container volume and the first lens volume, particularly wherein the first membrane has a first surface facing away from the first lens volume and a second surface that faces toward the first lens volume and that is in contact with the first liquid, particularly wherein the first membrane is connected to the first frame member

- A second, particularly elastically deformable membrane arranged on a second side of the container arranged opposite the first side of the container forming a second refractive surface of the lens, wherein the second membrane covers the container volume, particularly wherein the second membrane has a first surface facing toward the container volume and a second surface facing away from the container volume,

- A first actuator system configured and arranged for adjusting the first frame member along the optical axis to different heights along the perimeter of first frame member such that the container frame exhibits a varying extension along the optical axis along a perimeter of the container frame, wherein upon actuation by the first actuator system - particularly the at least first lens volume is adjusted such that - a shape of the first refractive surface and/or the second refractive surface is/are adjusted such that one or more optical properties of the lens are adjusted.

It is noted that the different heights of the first and/or the second frame member are adopted particularly at the same time or for achieving a specific state of the lens, as in contrast to a temporal dynamic of the frame member height, which is not meant.

That is, the lens is configured to adopt various states that are characterized in that the first and/or the second frame member height vary along a perimeter of the respective frame member but wherein the such evoked height profiles are essentially static for each state.

The lens is particularly configured to cover spherical power prescription range of population (50, 60, 70, 80, 85, 90, 95, 96, 97, 98, 99, 100% of population): - 10....6.5dpt -9.5...6 or -9....5.5dpt or - 9....5dpt or -8....4dpt, -7....4dpt, -6....4dpt, - 5...4dpt, -4...4dpt, -3.5 to 3.5dpt.

The lens is particularly configured to cover cylinder power, e.g. cylindrical (astigmatism) prescription range of population (50, 60, 70, 80, 85, 90, 95, 96, 97, 98, 99, 100% of population): -5 or -4.75 or -4.5 or -4.25 or -4 or -3.75 or -3.5 or -3.25 or - 3 or -2.75 or -2.5 or -2.25 or -2 0 dpt for any cylinder axis orientation.

The lens is particularly configured to cover prism prescription range of population (50, 60, 70, 80, 85, 90, 95, 96, 97, 98, 99, 100% of population): (0 2 or 3 or 4 or 5 or 6 15 or 7 or 8 or 10 prism dpt.

The lens according to the invention, particularly allows for non-round or non-circular membrane shapes / clear apertures:
The lens achieves good optical quality (refer to ANSI Z80.1-2015 for quality of rigid ophthalmic lenses) and comprises the further advantages:
The lens is compact having a small overall volume, comprises small center and edge thicknesses, e.g. <3, 4, 5, 6, 7, 8, 9, 10 mm and a narrow rim e.g. <1mm, 1.5mm, 2mm, 2.5mm, 3mm, 3.5mm, 4mm, 5mm, 6mm.

The lens allows for lower actuation forces as for example compared to single membrane lenses and provides low actuation complexity. The lens is comparably lightweight.

The first and/or the second actuator system can for example comprise one or more actuators from the kind as listed in the following:

    a) an electromechanical actuator,

    b) an electro-motor,

    c) an ultrasonic piezo motor,

    d) a piezo electric actuator,

    e) an electromagnetic actuator,

    f) muscle wires, muscle wire is a thin wire made from Nitinol a nickel-titanium alloy or other shape memory alloys, that is known for its ability to contract when an electric current is applied.

    g) "manual" actuator such as a screw or a lever.

        b. Actuation may have discrete tuning states

            a) Discrete actuation states can be achieved with bi-stable actuator(s), or

            b) Discrete actuation states can be achieved with mechanical locking points distributed throughout the range (e.g. flat spots on a cam). The Advantage: no holding power required in discrete states or allows for more repeatable manual actuation

        c. Simplification of actuation (coupling of the two liquid chambers)

            a) Single actuator controlling one of the properties, which can be used to generate two distinct chamber pressures (i.e. gauge pressures for the deformable membranes) by coupling the "rigid carrier / rigid lens element" to the frames through springs of different stiffness and different initial compression/extension.

            b) Couple actuation points on the first and second frame through levers with specific leverages

            c) coupled frames by means of leadscrews with specific (different) slopes.

According to another embodiment of the invention, the first and/or the second actuator system each comprise at least one actuator configured to control one of the optical properties of the lens, which can be used to generate two differing pressures in the first and the second lens volume, such as a gauge pressure for the first or the second membrane, wherein the first and/or the second lens shaping element are rigid and coupled to the container, by means of at least one spring element, wherein the spring elements generating the pressure of the first lens volume and the spring elements generating the pressure for the second lens volume have different spring constants and/or different initial compression/extension.

This embodiment allows a lens having a single degree of freedom that can be tuned for optimum optical quality, wherein (overall core compression x) the spherical power (also referred to as sphere power in the specification) of both refractive surfaces follow functions $f1(x)$ and $f2(x)$. By adjusting the initial spring length and the liquid fill volume, the offset $f1(x0)$ and $f2(x0)$ are determined. By adjusting the spring stiffness and membrane stiffness ratios, the slopes $df1/dx$ and $df2/dx$ are determined.

The first and/or the second lens shaping element particularly defines the area of the first or second membrane within which a deformation of the membrane can be achieved by actuation. Said area particularly comprises the clear aperture of the lens. The first and/or the second lens shaping element can be flexible and deformable, however, the shape of the first and or the second lens shaping element is always controllable by the first or the second actuator system.

Further, according to an embodiment of the present invention, the first and/or the second actuator system is configured to bend the deformable first and/or the second lens shaping element out of the plane in order to adjust the cylinder power of the lens.

Further, according to an embodiment of the present invention, the first and/or the second actuator system is configured to displace a plurality of points or portions of the first and/or the second lens shaping element along an optical axis of the lens to bend the deformable first and/or the second lens shaping element out of the plane in order to adjust the cylinder power of the lens.

Furthermore, according to another embodiment of the invention, the first and/or the second membrane can be a shell, e.g. a thin member formed e.g. out of a glass, plastic material or polymer and comprising e.g. a thickness in the range from $10\mu m$ to $200\mu m$ which is characterized in that it can also have significant out of plane forces. This means that a pure cylinder lens (no power in its reference axis) can be achieved without a pressure differential across the shell.

Further, according to an embodiment of the present invention, when the first and/or the second membrane form a shell that can be elastically bent out of its extension plane and generates restoring forces that try to bend the shell back to its initial flat state.

Particularly, in the framework of the present invention, an elastically deformable membrane is considered to be a shell in case its non-dimensional tension parameter k is smaller than 5. The non-dimensional tension parameter k is defined as

$$k = \sqrt{\frac{N_0 a^2}{D}}$$

where N0 is the initial in plane radial tension load, a is the radius of the circular membrane or shell and D is the bending stiffness. It is defined as

$$D = \frac{Eh^3}{12(1-v^2)}$$

where E is the modulus of elasticity, h is the membrane or shell thickness and v is the Poisson's ratio (cf. Sheploak, M., & Dugundji, J. (1998). Large deflections of clamped circular plates under initial tension and transitions to membrane behavior. Journal of Applied Mechanics, 65(1), 107-115)

Further, the sphere power can (almost) exclusively be determined and controlled by the respective other membrane in case the respective other membrane is not a shell

Now, it has been surprisingly found out, that the cylinder power can be adjusted by acting on a finite number of selected points or portions on the first and/or second frame member or the first and/or the second lens shaping element of the lens. Thus, precise control of the cylinder, prism and sphere power can be achieved with a relatively small number of e.g. linear actuators.

According to a first aspect, an adjustable lens 1 configured to adjust optical properties of the lens 1, the optical properties comprising at least an optical sphere power, an optical cylinder and/or an optical prism, particularly according to a prescription, comprising at least 5 the following components:

- A container 4, comprising a container volume VC with at least a first lens volume V1 filled with a first liquid L1,

- A container frame FC, comprising at least a first frame member 11 laterally enclosing the first lens volume L1 circumferentially, wherein the first frame member L1 can be adjusted with respect to a height of the first frame member 11 along an optical axis 100 of the lens 1, wherein the height of the first frame member 11 can be adjusted so it varies around a perimeter of the first frame member 11,

- A first transparent membrane 10 arranged on a first side of the container 4 forming a first refractive surface of the lens 1, wherein the first membrane 11 covers the container volume VC and the first lens volume V1,

- A second membrane 20 arranged on a second side of the container 4 arranged opposite the first side of the container 4 forming a second refractive surface of the lens 1, wherein the second membrane 20 covers the container volume VC,

- A first actuator system 13 configured and arranged for adjusting the first frame member 11 along the optical axis 100 to different heights 101 particularly simultaneously along the perimeter of the first frame member 11 such that the container frame FC exhibits a varying extension along the optical axis 100 along a perimeter of the container frame (FC), wherein upon actuation by the first actuator system 13 the first refractive surface and/or the second refractive surface is/are adjusted such that one or more optical properties of the lens 1 are adjusted.

According to a second aspect, the lens comprises first lens shaping element 12 that is connected or integrally formed with the first frame member 11, wherein the first lens shaping element 11 extends circumferentially along the first frame member 11, wherein the first lens shaping element 11 is circumferentially connected to the first membrane 10.

According to a third aspect, the first actuator system 13 is connected to and/or acts on different portions of the first frame member 11, such that a varying height 101 of the first frame member 11 along its perimeter can be adjusted.

According to a fourth aspect, the lens is an ophthalmic lens.

According to a fifth aspect, the first actuator system 13 comprises 2, 3, 4, 5, 6, 7 or 8 first actuators 13a, 13b, wherein each first actuator 13a, 13b is connected to and/or acts on a different portion of the first frame member 11 or the first lens shaping element 12, particularly wherein each first actuator 13a, 13b is independently adjustable, particularly wherein the portions vary in location with respect to a position along the perimeter of the first frame member 11 or the first lens shaping element 12.

According to a sixth aspect, the first frame member 11 when viewed along the optical axis 100 of the lens is noncircular, particularly non-round, particularly wherein the first lens shaping element when viewed along the optical axis is non-circular, more particularly non-round.

According to a seventh aspect, the container VC volume comprises a second lens volume V2 filled with a second liquid L2, wherein the first and the second liquid L1, L2 are separated from each other by a separating member 30, wherein the second membrane 20 covers the second lens volume V2, wherein the container frame FC comprises a second frame member 21 laterally enclosing the second lens volume V2 circumferentially, wherein the optical axis 100 of the lens 1 extends through the first and the second lens volume V1, V2.

According to an eighth aspect, the lens comprises a second lens shaping element 22 that is connected or integrally formed with the second frame member 21, wherein the second lens shaping element 22 extends circumferentially along the second frame member 21, wherein the second lens shaping element 22 is circumferentially connected to the second membrane 20.

According to a ninth aspect, the separating member 30 is a third transparent membrane, or wherein the separating member 30 is a stiff transparent member, particularly wherein the separating frame member has a meniscus shape or an aberration correcting shape.

According to a tenth aspect, the separating member is planar or wherein the separating member has a surface that extends essentially orthogonal to the optical axis, wherein said surface exhibits a curvature of the lens.

According to an eleventh aspect, the first and the second frame members 11, 21 are circumferentially connected to the separating member 30.

According to a twelfth aspect, the second frame member 21 can be adjusted with respect to a height 102 of the second frame member 21 along an optical axis 100 of the lens 1, wherein the height of the second frame member 21 can be adjusted so it varies around a perimeter of the second frame member 21.

According to a 13th aspect, the lens comprises a second actuator system 23 configured and arranged for adjusting the second frame member 21 along the optical axis 100 to different heights 102 along the perimeter of the second frame member 21 such that the container frame FC exhibits a varying extension x, x' along the optical axis 100 along a perimeter of the container frame FC, wherein upon actuation by the second actuator system 23 - particularly the second lens volume V2, particularly a pressure p2 in the second lens volume V2 is adjusted such that - a shape of the second refractive surface is adjusted such that one or more optical properties of the lens 1 are adjusted.

According to a 14th aspect, the second actuator system 23 is connected to or acts on different portions of the second frame member 21 or the second lens shaping element 22, such that a varying height 102 of the second frame member 21 can be adjusted, particularly wherein the portions vary in location with respect to a position along the perimeter of the second frame member 21.

According to a 15th aspect the second actuator system 23 comprises 2, 3, 4, 5, 6, 7 or 8 second actuators 23a, 23b, wherein each second actuator 23a, 23b is connected to or acts a different portion of the second frame member 21 or second lens shaping element 22, particularly wherein each second actuator 23a, 23b is independently adjustable, particularly wherein the portions vary in location with respect to a position along the perimeter of the second frame member 21.

According to a 16th aspect, the second frame member is non-circular, particularly non-round, particularly wherein the second lens shaping element is non-circular, particularly non-round, particularly wherein the second frame member has the same shape or a scaled shape of the first frame member.

According to a 17th aspect, the lens is configured to adjust the one or more optical properties are adjusted partially by the shape of first refractive surface of the first membrane and the second refractive surface by the second membrane.

According to an 18th aspect, the first membrane is connected to the first lens shaping element, wherein the first lens shaping element extends circumferentially along the first frame member.

According to a 19th aspect, the first lens shaping element is rigid and/or stiff.

According to a 20th aspect, the first lens shaping element is elastically deformable.

According to a 21st aspect, the second membrane is connected to the second lens shaping element, wherein the second lens shaping element extends circumferentially along the second frame member.

According to a 22nd aspect, the second lens shaping element is rigid and/or stiff.

According to a 23rd aspect, the second lens shaping element is elastically deformable.

According to a 24th aspect, the first frame member comprises or consists of at least one first spring element that is configured to provide a resting state to the lens, particularly to the shape of the first membrane, particularly wherein the resting state is characterized in that a force provided by the first spring element is in equilibrium with a force generated by the pressure of the first liquid on the first membrane, particularly wherein the first spring element is connected to the first lens shaping element.

According to a 25th aspect, the adjustable optical properties of the lens comprise at least one or a group of:

- a cylinder power and/or a cylinder axis,

- a spherical power,

- a prism power and/or a prism axis.

According to a 26th aspect, the lens is configured such that the first membrane and the second membrane contribute to the sphere power of the lens partially particularly by an equal contribution, such that the sphere power invoked by the shape of the first refractive surface and the sphere power invoked by the shape of the second refractive surface combined provide the sphere power the lens is to be adjusted for.

According to a 27th aspect, the lens is configured such that the first membrane and the second membrane both contribute to the cylinder power and/or the cylinder axis partially, such that the cylinder power and/or axis invoked by the shape of the first refractive surface and the cylinder power and/or cylinder axis invoked by the shape of the second refractive surface combined provide the cylinder power and/or axis the lens is to be adjusted for.

According to a 28th aspect, the lens is configured such that the first membrane and the second membrane both contribute to the prism power and/or the prism axis partially, such that the prism power and/or prism axis invoked by the shape of the first refractive surface and the prism power and/or prism axis invoked by the shape of the second refractive surface combined provide the prism power and/or prism axis the lens is to be adjusted for.

According to a 29th aspect, the lens is configured such that the sphere power is adjusted solely by the shape of the first refractive surface and wherein the second refractive surface does not adjust for sphere power, or vice versa.

According to a 30th aspect, the lens is configured such that the cylinder power and the cylinder axis is adjusted solely by the shape of the first refractive surface and wherein the second refractive surface does not adjust for cylinder power, or vice versa.

According to a 31st aspect, the lens is configured such that the first refractive surface forms or can form, particularly in addition to other optical property adjustments, such as sphere or prism, a first cylinder power along a first cylinder axis and wherein the second refractive surface forms or can form, particularly in addition to other optical property adjustments, such as sphere or prism, a second cylinder power along a second cylinder axis, such that the combined cylinder power and combined cylinder axis of the first and the second refractive surface provide the cylinder power and axis the lens is to be adjusted to.

According to a 32nd aspect, the second cylinder axis is oriented along the first cylinder axis such that a cylinder power to be achieved is formed by the lens along the first cylinder axis.

According to a 33rd aspect, the second cylinder axis is oriented at a cylinder decomposition angle with respect to the first cylinder axis, wherein the cylinder decomposition angle is in the range of 35° to 55°, particularly is in the range of 40° to 50°, particularly wherein the cylinder decomposition angle is 45° such that a combined cylinder axis and cylinder power to be achieved is formed by the lens.

According to a 34th aspect, the lens is configured such that the prism power and the prism axis is adjusted solely by the shape of the first refractive surface and wherein the second refractive surface does not adjust for prism power, or vice versa.

According to a 35th aspect, the lens is configured such that the first refractive surface forms or can form, particularly in addition to other optical property adjustments, such as sphere or cylinder, a first prism power along a first prism axis and wherein the second refractive surface forms or can form, particularly in addition to other optical property adjustments, such as sphere or cylinder, a second prism power along a second prism axis, such that the combined prism power and combined prism axis of the first and the second refractive surface provide the prism power and prism axis the lens is to be adjusted to.

According to a 36th aspect, the second prism axis is oriented along the first prism axis such that a prism power to be achieved is formed by the lens along the first prism axis.

According to a 37th aspect, the second prism axis is oriented at a prism decomposition angle with respect to the prism axis, particularly wherein the prism decomposition angle is in the range of 40° to 140°, more particularly in the range of 45° to 135°, even more particularly in the range of 80° to 100°, particularly in the range of 85° to 95°, particularly wherein the prism decomposition angle is 90° such that a combined prism axis and prism power to be achieved is formed by the lens.

According to a 38th aspect, the lens is configured to adjust the shape of the first refractive surface only with respect to sphere power and wherein the lens is further configured to adjust the shape of the second refractive surface only with respect to cylinder power and/or cylinder axis, or vice versa.

According to a 39th aspect, the first actuator system comprises a bending actuator with at least a first annular active layer, wherein said first active layer is comprised by the first lens shaping element or the first frame member, and wherein the first active layer is configured to expand or contract in a first direction to bend the first lens shaping element so that the first membrane adopts a cylinder power along a first cylinder axis.

According to a 40th aspect, the second actuator system comprises a bending actuator with at least a second annular active layer, wherein said second active layer is comprised by the second lens shaping element or the second frame member, and wherein the second layer is configured to expand or contract in a second direction to bend the second lens shaping element so that the second membrane lens adopts a cylinder power along a second cylinder axis.

According to a 41st aspect, in a resting state of the lens, the first membrane is concave and the second membrane is convex or vice versa.

According to a 42nd aspect, the first lens volume and the second lens volume are arranged adjacent to each other along the optical axis of the lens, particularly wherein the first liquid is in contact with the separating member and the second liquid is in contact with the separating member.

According to a 43rd aspect, the first and/or the second actuator system are adjustable screws.

According to a 44th claim, the first and the second actuator system is mechanically coupled such that any actuation of the first actuation system invokes change of the second actuation system.

According to a 45th claim, the first and the second actuator system 13, 23 comprise rigid levers that are rotatably connected to the separating member 30 and extend towards the first and second lens shaping element 12, 22, where the levers are rotatably connected with the first and second lens shaping element 12, 22, such that actuation of the first and second actuation system 13, 23 is achieved by partially rotating the levers.

According to a 46th aspect, the first or the second membrane are flexible only along one axis at a time, such that the first and/or second membrane can only assume a cylindrical membrane surface shape.

According to a 47th aspect, the second frame member is stiff and/or rigid.

According to a 48th aspect, the second frame member comprises or consists of at least one second spring element that is configured to provide the resting state to the lens, particularly to the shape of the second membrane, particularly wherein the resting state is characterized in that a force provided by the spring is in equilibrium with a force generated by the liquid pressure on the first membrane, particularly wherein the spring element is connected to the first lens shaping element.

According to a 49th aspect, the first liquid and the second liquid are identical, or wherein the first and the second liquid differ in at least their refractive index and/or the mass density.

According to a 50th aspect a stiffness of the first and the second membrane are different from each other.

According to a 51st aspect, a method for adjusting one or more optical properties lens according to one of the preceding aspects is disclosed. The method comprising the steps of:

- Adjusting the first actuator system such that the shape of the first and/or the second refractive surface is adjusted such that the one or more optical properties is provided by the lens.

According to a 52nd aspect, one or more of the following optical properties are adjusted by the lens:

- a cylinder power and/or a cylinder axis,

- a spherical power,

- a prism power and/or a prism axis.

According to a 53rd aspect, the first membrane and the second membrane provide the sphere power partially particularly by an equal contribution, such that the sphere power invoked by the shape of the first refractive surface and the sphere power invoked by the shape of the second refractive surface combined provide the sphere power the lens is to be adjusted for.

According to a 54th aspect, the first membrane and the second membrane provide the cylinder power and/or the cylinder axis partially, such that the cylinder power and/or axis invoked by the shape of the first refractive surface and the cylinder power and/or cylinder axis invoked by the shape of the second refractive surface combined provide the cylinder power and/or axis the lens is to be adjusted for.

According to a 55th aspect, the first membrane and the second membrane provide the prism power and/or the prism axis partially, such that the prism power and/or prism axis invoked by the shape of the first refractive surface and the prism power and/or prism axis invoked by the shape of the second refractive surface combined provide the prism power and/or prism axis the lens is to be adjusted for.

According to a 56th aspect, the sphere power is adjusted solely by the shape of the first refractive surface and wherein the second refractive surface does not adjust for sphere power, or vice versa.

According to a 57th aspect, the cylinder power and the cylinder axis is adjusted solely by the shape of the first refractive surface and wherein the second refractive surface does not adjust for cylinder power, or vice versa.

According to a 58th aspect, the prism power and the prism axis is adjusted solely by the shape of the first refractive surface and wherein the second refractive surface does not adjust for prism power, or vice versa.

According to a 59th aspect, the first refractive surface forms, particularly in addition to other optical property adjustments, such as sphere or prism, a first cylinder power along a first cylinder axis and wherein the second refractive surface forms or can form, particularly in addition to other optical property adjustments, such as sphere or prism, a second cylinder power along a second cylinder axis, such that the combined cylinder power and combined cylinder axis of the first and the second refractive surface provide the cylinder power and cylinder axis the lens is to be adjusted to.

According to a 60th aspect, the second cylinder axis is oriented along the first cylinder axis such that a cylinder power to be achieved is formed by the lens along the first cylinder axis.

According to a 61st aspect, the second cylinder axis is oriented at a cylinder decomposition angle with respect to the first cylinder axis, wherein the cylinder decomposition angle is in the range of 35° to 55°, particularly is in the range of 40° to 50°, particularly wherein the cylinder decomposition angle is 45° such that a combined cylinder axis and cylinder power to be achieved is formed by the lens.

According to a 62nd aspect, the first refractive surface forms, particularly in addition to other optical property adjustments, such as sphere or cylinder, a first prism power along a first prism axis and wherein the second refractive surface forms or can form, particularly in addition to other optical property adjustments, such as sphere or cylinder, a second prism power along a second prism axis, such that the combined prism power and combined prism axis of the first and the second refractive surface provide the prism power and prism axis the lens is to be adjusted to.

According to a 63rd aspect, the second prism axis is oriented along the first prism axis such that a prism power to be achieved is formed by the lens along the first prism axis.

According to a 64th aspect, the second prism axis is oriented at a prism angle with respect to the prism axis, particularly wherein the prism decomposition angle is in the range of 40° to 140°, more particularly in the range of 45° to 135°, even more particularly in the range of 80° to 100°, particularly in the range of 85° to 95°, particularly wherein the prism decomposition angle is 90° such that a combined prism axis and prism power to be achieved is formed by the lens.

According to a 65th aspect, the shape of the first refractive surface is adjusted only with respect to sphere power and wherein the lens is further configured to adjust the shape of the second refractive surface only with respect to cylinder power and/or cylinder axis.

According to a 66th aspect, a resting state of the lens is adopted in which the first membrane is concave and the second membrane is convex or vice versa, particularly when the first or the second actuator system is in equilibrium.

According to a 67th aspect, the first and/or the second actuator system is only stepwise adjustable, such that only discrete adjustments of the optical properties can be achieved by the first and/or second actuator system.

According to a 68th aspect the first and/or the second actuator system is only stepwise adjustable, such that only discrete adjustments of the optical properties can be achieved by the first and/or second actuator system.

According to a 69th aspect, the first and/or the second actuator system each comprise at least one actuator configured to control one of the optical properties, which can be used to generate two differing pressures in the first and the second lens volume, such as a gauge pressure for the first or the second membrane, wherein the first and/or the second lens shaping element are rigid and coupled to the container, by means of at least one spring element, wherein the spring elements generating the pressure of the first lens volume and the spring elements generating the pressure for the second lens volume have different spring constants and/or different initial compression/extension.

According to one embodiment, the first membrane or the second membrane is arranged to solely adjust optical sphere power, wherein the lens comprises a fluidic volume, a flexible membrane and a shaping element, wherein the membrane delimits the fluidic volume on one side, the shaping element is attached to the membrane, the shaping element surrounds an optically active region of the membrane, the shaping element is arranged to alter optical properties of the tunable lens by deflection, in top view the shaping element has a non-circular contour, wherein the contour extends within an imaginary circumcircle, and the amount of deflection of the shaping element is proportional to a lateral distance of the contour to the circumcircle.

The tunable lens is a refractive optical element, which is arranged to interact with electromagnetic radiation, in particular visible light, in a definable manner. For example, the tunable lens is arranged to tune optical properties like optical power and/or cylinder.

The tunable lens comprises the container volume (also called fluidic volume), the transparent membrane (also called flexible membrane) and the lens shaping element (also called shaping element). The fluidic volume may be a delimited region, which is at least partially passed through by electromagnetic radiation during normal operation. In particular, the fluidic volume is at least partially delimited by the flexible membrane. The fluidic volume is filled with a fluid which may be in gaseous phase or in liquid phase. In particular the fluidic volume may be filled with a water-based liquid or with an oil-based liquid.

The flexible membrane delimits the fluidic volume on one side. In particular, the fluid is directly adjacent to the flexible membrane. The flexible membrane comprises an optical surface of the tunable lens. At least on optical property is adjustable by changing the shape of the flexible membrane. Here and in the following, the term "flexible" in the context of the membrane describes a property of the membrane which allows the membrane to be bent obliquely to its main plane of extension. In particular, the membrane is expandable. Here and in the following the term "expandable" in the context of the membrane describes a property of the membrane which enables to expand the membrane reversibly along its main plain of extension.

The shaping element is attached to the membrane. The shaping element may have a ring shape. In particular, the shaping element is attached to one surface of the membrane. In particular, the membrane and the shaping element are connected by a material bonded connection. Alternatively, the shaping element and the membrane may be fabricated in a one-piece manner, wherein the shaping element and the membrane are fabricated simultaneously in common fabrication steps. In particular, the shaping element and the membrane may comprise a same material. The main planes of extension of the shaping element and the membrane extend essentially parallel to each other. In a direction perpendicular to the main plane of extension, the thickness of the shaping element is larger than the thickness of the membrane. In particular, the stiffness of the shaping element is larger than the stiffness of the membrane. For example, the shaping element is arranged to transfer forces along the perimeter of the membrane, to control the deflection of the membrane along the perimeter of shaping element.

The shaping element surrounds an optically active region of the membrane. During intended operation, electromagnetic radiation passes through the optically active region. In particular, the shaping element extends continuously circumferentially around the optically active region. The shaping element and the membrane form a common contact surface, which surrounds the optically active region continuously.

The shaping element is arranged to alter optical properties of the tunable lens by deflection. The deflection describes a displacement of the shaping element in a direction along the optical axis of the tunable lens. In particular a deflection of the shaping element results in a change of the shape of the membrane, whereby optical properties of the liquid lens are altered. Additionally, or alternatively, the shaping element is arranged to limit the deflection of the membrane, to alter optical properties of the liquid lens in a desired manner.

In top view, the shaping element has a non-circular contour, wherein the contour of the shaping element extends within an imaginary circumcircle. Here and in the following, the "top view" is the perspective perpendicular with respect to the main extension plane of the shaping element in a nondeflected state. For example, the main plain of extension of the shaping element extends perpendicularly with respect to the optical axis. The shaping element may have a non-circular ring-shape seen in a top view. The width of the shaping element seen in a top view may be constant.

When tuning the lens, the amount of deflection of the shaping element is proportional to a lateral distance of the contour to the circumcircle. The lateral distance is measured along the main plain of extension of the shaping element. Here and in the following, the lateral distance is measured in the direction of the radius of the circumcircle. In particular, when altering the optical properties of the tunable lens, the deflection of a section of the shaping element increases with increasing lateral distance.

According to one embodiment, the tunable lens comprises the fluidic volume, the flexible membrane, and the shaping element. The membrane delimits the fluidic volume on one side, the shaping element is attached to the membrane and the shaping element surrounds an optically active region of the membrane. The shaping element is arranged to alter optical properties of the tunable lens by deflection, in particular in a direction along the optical axis of the tunable lens. In top view the shaping element has a non-circular contour, wherein the contour of the shaping element extends within an imaginary circumcircle, and the amount of deflection of the shaping element is proportional to a lateral distance of the shaping element to the circumcircle. In particular, the shaping element is arranged such that essentially all points of the shaping element lie on the surface of an imaginary spherical surface. In particular, the radius of curvature of said spherical surface changes when altering the optical properties.

According to one embodiment, the lens comprises the actuator system, wherein the actuator system is arranged to apply a deflection force to the shaping element. The deflection force is applied to multiple deflection points of the shaping element, wherein the absolute value of the deflection force applied at each deflection point is proportional to a lateral distance of the deflection point to the circumcircle.

According to one embodiment, the tunable lens comprises an actuator system, wherein the actuator system is arranged to apply a deflection force to the shaping element, the deflection force is applied uniformly to the shaping element. A retention force acts against the deflection force, wherein the absolute value of the retention force is proportional to the lateral distance of the contour to the circumcircle.

According to one embodiment, the tunable lens comprises at least five actuation points, wherein at each actuation point is a deflection point, a retention point or both. The actuation points are distributed along the perimeter of the shaping element and seen in a top view the actuation points are located at positions where curvature of the contour has a local extremum or is zero.

Alternatively, the actuation points are distributed along the perimeter of the shaping element and seen in a top view the curvature of the contour at the actuation points has a same value.

Alternatively, the actuation points are distributed along the perimeter of the shaping element, wherein the actuation points are distributed at distances of equal arc lengths along the perimeter with respect to each other.

Alternatively, the actuation points are distributed along the perimeter of the shaping element, wherein the actuation points have an equal angel distance with respect to each other.

Alternatively, the contour of the shaping element is point-symmetric, at least two of the actuation points are arranged on opposite sides of the shaping element with respect to a point of symmetry of the contour. In particular, the actuation points which are arranged on opposite sides of the shaping element have the same deflection in each tuning state.

According to one embodiment, of the method for adjusting one or more optical properties the deflection of the shaping element, the tunable lens comprises a flexible membrane and a shaping element, wherein the membrane forms an optical surface of the tunable lens, the shaping element is attached to the membrane, the shaping element has a non-circular ring contour in top view, the shaping element surrounds an optically active region of the membrane, wherein the deformation of the membrane when tuning the lens is controlled by the deflection of the shaping element in a direction along the optical axis. The contour of the shaping element extends within an imaginary circumcircle, and the amount of deflection of the shaping element is proportional to a lateral distance of the contour to the circumcircle. The lens is controlled such that the contour of the shaping element lies on a surface of an imaginary spherical segment, wherein the radius of curvature of said spherical segment alters when the tunable lens is tuned.

In particular, the deflection of the first membrane or the second membrane along the optical axis may be adjusted as described in the German patent application 102020134753.7, the content of which is hereby incorporated by reference. The fluidic volume corresponds to the first volume or the second volume of the present disclosure, the flexible membrane corresponds to the first membrane or the second membrane of the present disclosure and the shaping element corresponds to the first lens shaping element or the second lens shaping element.

Particularly, exemplary embodiments are depicted in the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.

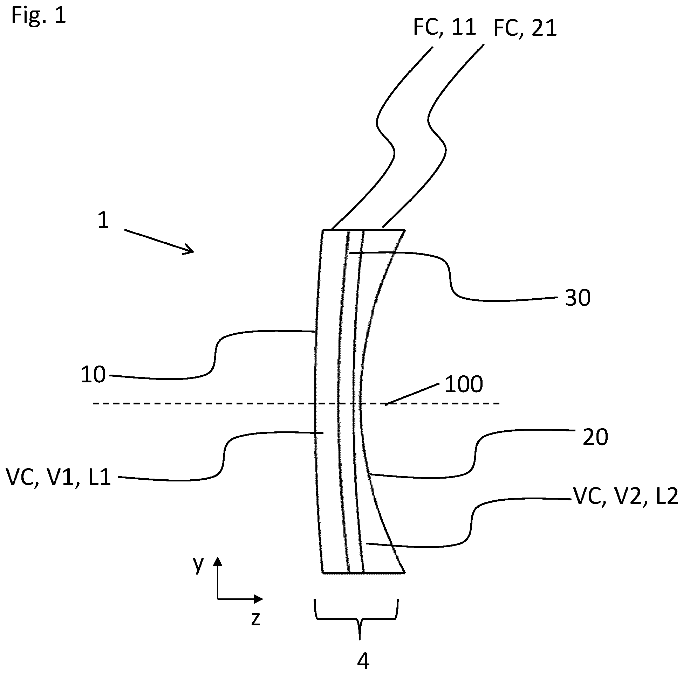

Figure 1 shows an exemplary embodiment of an adjustable lens 1, which is configured to adjust optical properties of the lens 1. The optical properties comprising at least an optical sphere power, an optical cylinder and/or an optical prism. The lens comprises the following components:

- A container 4, comprising a container volume VC with at least a first lens volume V1 filled with a first liquid L1,

- A container frame FC, comprising at least a first frame member 11 laterally enclosing the first lens volume L1 circumferentially, wherein the first frame member L1 is adjustable with respect to a height of the first frame member 11 along an optical axis 100 of the lens 1, wherein the height of the first frame member 11 is adjustable so it varies around a perimeter 200 of the first frame member 11,

- A first transparent membrane 10 arranged on a first side of the container 4 forming a first refractive surface of the lens 1, wherein the first membrane 11 delimits the container volume VC and the first lens volume V1,

- A second membrane 20 arranged on a second side of the container 4 arranged opposite the first side of the container 4 forming a second refractive surface of the lens 1, wherein the second membrane 20 delimits the container volume VC,

- A first actuator system 13 configured and arranged for adjusting the first frame member 11 along the optical axis 100 to different heights 101, particularly simultaneously along the perimeter of the first frame member 11, such that the container frame FC exhibits a varying extension along the optical axis 100 along a perimeter of the container frame FC, wherein upon actuation by the first actuator system 13 the first refractive surface and/or the second refractive surface is/are adjusted such that one or more optical properties of the lens 1 are adjusted.

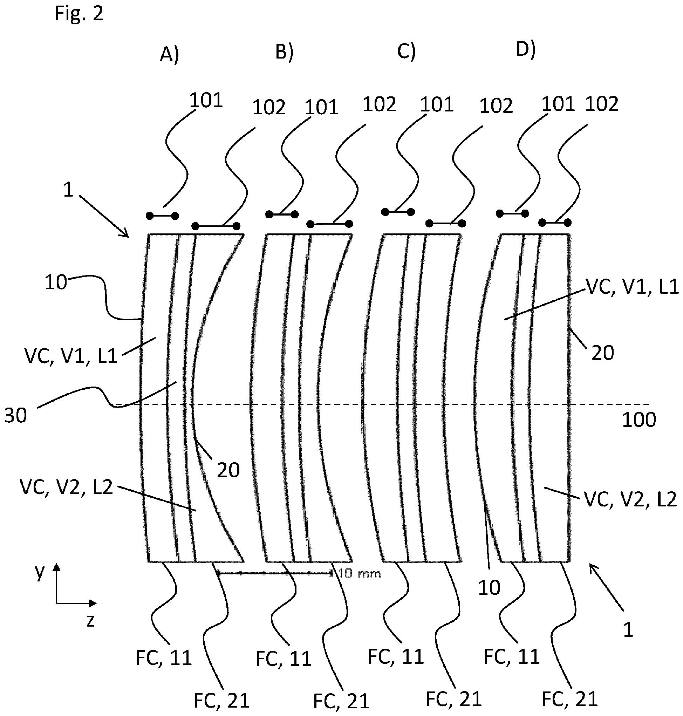

Figure 2A), 2B), 2C) and 2D) show an exemplary embodiment of a lens 1 in different tuning states of the lens. In the different tuning states, the height 101 of the first frame member 11 and the height 102 of the second frame member 21 are altered. In the different tuning states shown in figures 2A), 2B), 2C) and 2D), the height 102 decreases from A) to D), whereby the concave curvature of the second membrane decreases from 2A), 2B), 2C) and 2D). In the different tuning states shown in figures 2A), 2B), 2C) and 2D), the height 101 decreases from A) to D), whereby the convex curvature of the second membrane increases from 2A), 2B), 2C) and 2D). The height 101, 102 is defined by a distance between the separating member to the first frame member 11 or the second frame member 21.

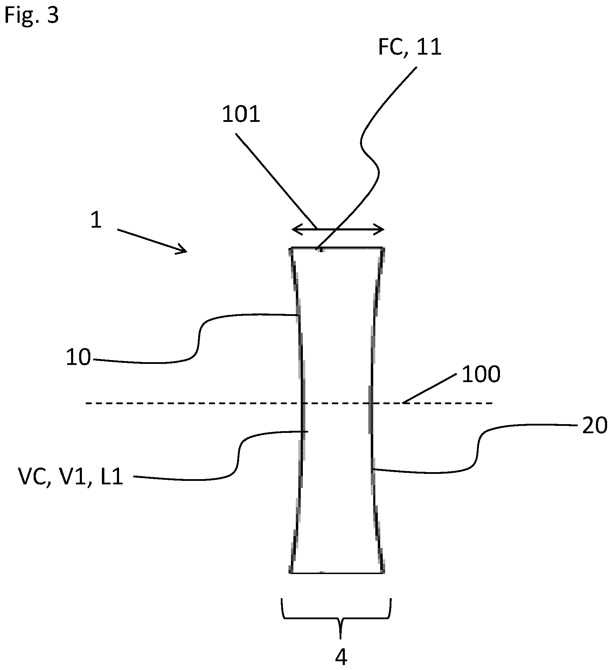

Figure 3 shows an embodiment of the lens 1, wherein the container volume VC solely comprises a first lens volume V1.

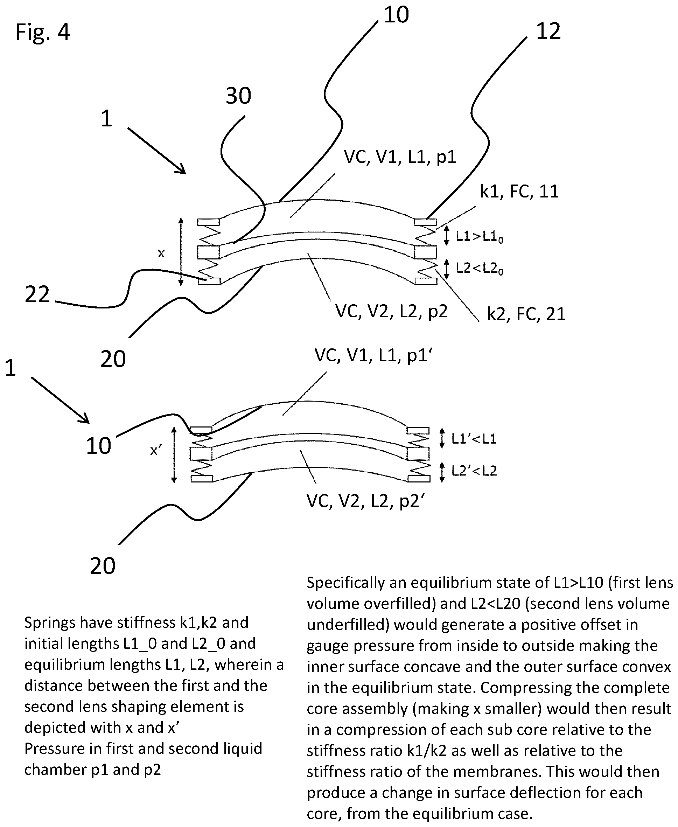

Figure 4 shows an embodiment of a lens 1 in different tuning states. The frame members are connected to the separating member 30 by means of springs. Sis springs may be elastic membranes forming a bellows structure, wherein the membranes delimit the container volume VC at least partially.

The springs have stiffness k1, k2 and initial lengths L1_0 and L2_0 and equilibrium lengths L1, L2, wherein a distance between the first and the second lens shaping element is depicted with x and x'. The first liquid volume V1 has a pressure p1 and the second liquid volume V2 has a pressure p2.

In an equilibrium state of $L1 > L1_0$ (first lens volume overfilled) and $L2 < L2_0$ (second lens volume underfilled) generates a positive offset in gauge pressure from inside to outside making the inner surface concave and the outer surface convex in the equilibrium state. Compressing the lens (making x smaller) would then result in a compression of the first volume V1 and the second volume V2, wherein the respective tuning of the first membrane 10 and the second membrane is proportional to the stiffness ratio k1/k2 as well as relative to the stiffness ratio of the membranes. The deflection of the frame members with respect to the separating member 30 results in a change of the deflection of the first and second membrane.

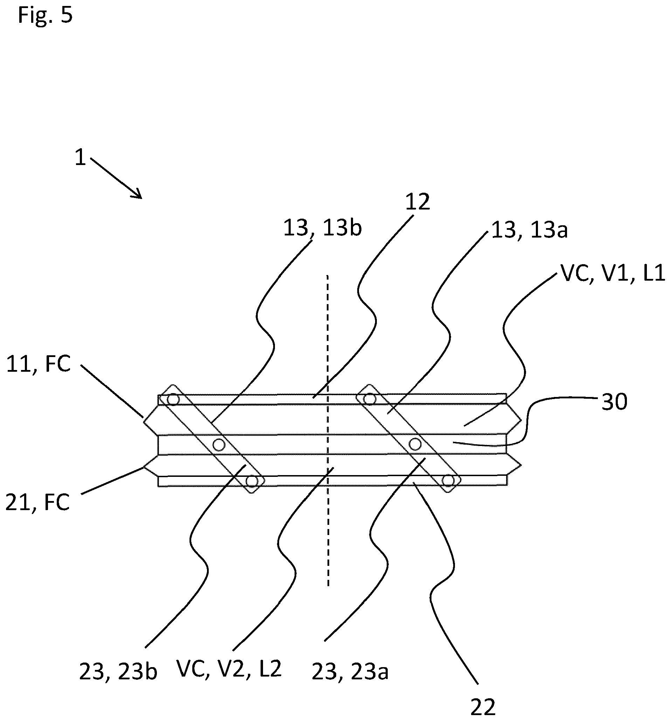

Figure 5 shows an exemplary embodiment of a lens, wherein the first frame member 12 and the second frame member 22 are coupled to each other.

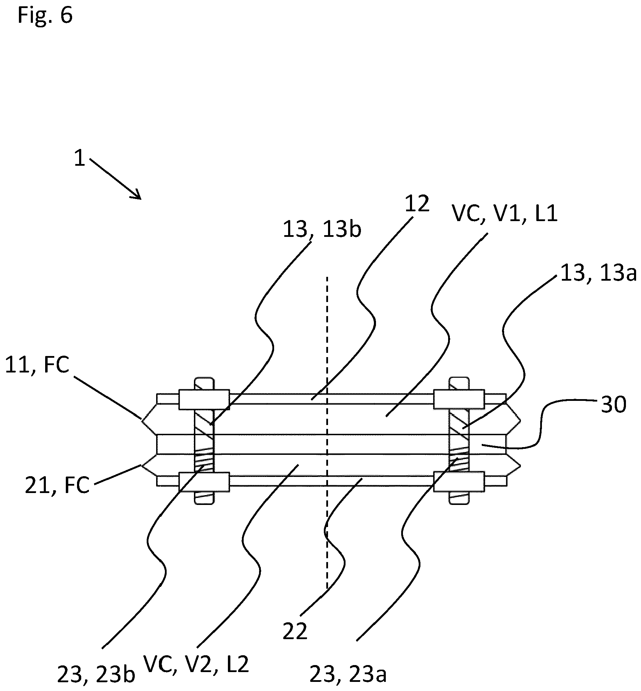

Figure 6 shows an exemplary embodiment of a lens 1 in a schematic side view. The lens comprises an actuator system 13 with first actuators 13a, 13b and second actuators 23a, 23b. The first actuator 13a and the second actuator 23a comprise a common threaded rod and the first actuator 13b and the second actuator 23b comprise a common threaded rod. The first lens shaping element 12 and the second lens shaping element 22 are connected to the threaded rods. The actuator system 12 is arranged to turn the threaded rods, whereby the position of the first lens shaping element 12 and the second lens shaping element 22 along the threaded rods is adjusted. In particular, the threaded rods comprise sections with different thread pitch, whereby a rotation of the threaded rod results in a different amount of displacement of the first and second lens shaping element.

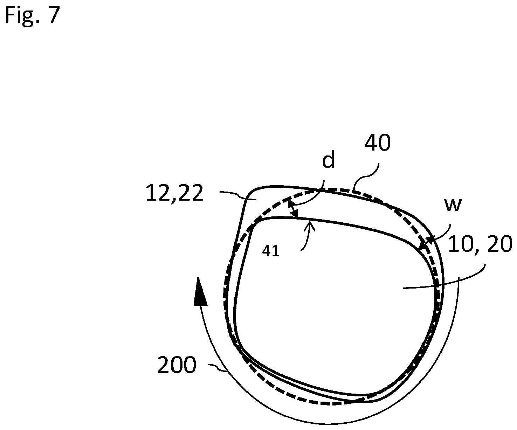

Figure 7 shows an exemplary embodiment of a lens in a schematic top view. In this embodiment the first membrane 10 or the second membrane 20 is arranged to solely adjust optical sphere power. The lens comprises the fluidic volume VC, the flexible membrane 10,20 and the shaping element 12,22. The membrane 10,20 delimits the fluidic volume VC on one side, the shaping element 12, 22 is attached to the membrane 10, 20, the shaping element 12, 22 surrounds an optically active region of the membrane 10,20. The shaping element 12, 22 is arranged to alter optical properties of the tunable lens by deflection. In top view the shaping element 12, 22 has a non-circular contour 41, wherein the contour 41 extends within an imaginary circumcircle 40, and the amount of deflection of the shaping element 12, 22 is proportional to a lateral distance d of the contour 41 to the circumcircle 40.

The width 2 of the shaping element 12, 22 varies at different positions along the perimeter 200 of the ring-shaped shaping element 12, 22. The width w of the shaping element 12, 22 is measured along the direction of the radius of the circumcircle 40. In particular, the contour 41 of the shaping element 12, 22 is defined by the inner edge of the shaping element 12, 22, wherein the inner edge faces the optically active area of the membrane 10, 20. Here and in the following, the circumcircle 40 is an imaginary circle which completely surrounds the contour 41 of the shaping element 12, 22, while having a minimum radius. In particular, the circumcircle 40 may intersect the shaping element 12, 22, because the inner edge of the shaping element 12, 22 defines the contour 41.

List of reference signs

| | |
|---|---|
| 1 | Lens |
| 4 | Container |
| VC | Container volume |
| V1 | First lens volume |
| V2 | Second lens volume |
| 11 | First frame member |
| 21 | Second frame member |
| 100 | Optical axis |
| FC | Container frame |
| 10 | First membrane |
| 20 | Second membrane |
| 13 | Actuator system |
| 12 | First lens shaping element |
| 101 | Height of first frame member |
| 102 | Height of second frame member |
| 13 | Actuator system |
| 13a, 13b | First actuator |
| L1 | First liquid |
| L2 | Second liquid |
| 22 | Second lens shaping element |
| 23 | Second actuator system |
| 23a, 23b | Second actuator |
| 30 | Separating member |
| 40 | Circumcircle |
| w | Width of shaping element |
| d | Distance between contour and circumcircle |
| 41 | contour |
| 200 | perimeter |

**Claims**

1.  An adjustable lens (1) configured to adjust optical properties of the lens (1),
    the optical properties comprising at least an optical sphere power, an optical cylinder and/or an optical prism, comprising at least the following components:

    - A container (4), comprising a container volume (VC) with at least a first lens volume (V1) filled with a first liquid (L1),
    - A container frame (FC), comprising at least a first frame member (11) laterally enclosing the first lens volume (L1) circumferentially, wherein the first frame member (L1) can be adjusted with respect to a height of the first frame member (11) along an optical axis (100) of the lens (1), wherein the height of the first frame member (11) can be adjusted so it varies around a perimeter of the first frame member (11),
    - A first transparent membrane (10) arranged on a first side of the container (4) forming a first refractive surface of the lens (1), wherein the first membrane (11) delimits the container volume (VC) and the first lens volume (V1),
    - A second membrane (20) arranged on a second side of the container (4) arranged opposite the first side of the container (4) forming a second refractive surface of the lens (1), wherein the second membrane (20) delimits the container volume (VC),
    - A first actuator system (13) configured and arranged for adjusting the first frame member (11) along the optical axis (100) to different heights (101), particularly simultaneously along the perimeter of the first frame member (11), such that the container frame (FC) exhibits a varying extension along the optical axis (100) along a perimeter of the container frame (FC), wherein upon actuation by the first actuator system (13) the first refractive surface and/or the second refractive surface is/are adjusted such that one or more optical properties of the lens (1) are adjusted.

2. Lens according to claim 1, wherein the lens comprises first lens shaping element (12) that is connected or integrally formed with the first frame member (11), wherein the first lens shaping element (11) extends circumferentially along the first frame member (11), wherein the first lens shaping element (11) is circumferentially connected to the first membrane (10), the first actuator system (13) comprises 2, 3, 4, 5, 6, 7 or 8 first actuators (13a, 13b), wherein each first actuator (13a, 13b) is connected to and/or acts on a different portion of the first frame member (11) or a first lens shaping element (12), particularly wherein each first actuator (13a, 13b) is independently adjustable, particularly wherein the portions vary in location with respect to a position along the perimeter of the first frame member (11) or the first lens shaping element (12).

3. Lens according to one of the preceding claims, wherein the first frame member (11) when viewed along the optical axis (100) of the lens is noncircular and/or wherein the first lens shaping element when viewed along the optical axis is non-circular.

4. Lens according to one of the preceding claims, wherein the container (VC) volume comprises a second lens volume (V2) filled with a second liquid (L2), wherein the first and the second liquid (L1, L2) are separated from each other by a separating member (30), wherein the second membrane (20) covers the second lens volume (V2), wherein the container frame (FC) comprises a second frame member (21) laterally enclosing the second lens volume (V2) circumferentially, wherein the optical axis (100) of the lens (1) extends through the first and the second lens volume (V1, V2).

5. Lens according to claim 4, wherein the second frame member (21) can be adjusted with respect to a height (102) of the second frame member (21) along an optical axis (100) of the lens (1), wherein the height of the second frame member (21) can be adjusted so it varies around a perimeter of the second frame member (21).

6. Lens according to claim 4 or 5, wherein the lens comprises a second lens shaping element (22) that is connected or integrally formed with the second frame member (21), wherein the second lens shaping element (22) extends circumferentially along the second frame member (21), wherein the second lens shaping element (22) is circumferentially connected to the second membrane (20), and the second actuator system (23) is connected to or acts on different portions of the second frame member (21) or the second lens shaping element (22), such that a varying height (102) of the second frame member (21) can be adjusted, particularly wherein the portions vary in location with respect to a position along the perimeter of the second frame member (21).

7. Lens according to one of the claims 4 to 6, wherein the lens comprises a second actuator system (23) configured and arranged for adjusting the second frame member (21) along the optical axis (100) to different heights (102) along the perimeter of the second frame member (21) such that the container frame (FC) exhibits a varying extension (x, x') along the optical axis (100) along a perimeter of the container frame (FC), wherein upon actuation by the second actuator system (23) - particularly the second lens volume (V2), particularly a pressure (p2) in the second lens volume (V2) is adjusted such that - a shape of the second refractive surface is adjusted such that one or more optical properties of the lens (1) are adjusted the second actuator system (23) comprises 2, 3, 4, 5, 6, 7 or 8 second actuators (23a, 23b), wherein each second actuator (23a, 23b) is connected to or acts a different portion of the second frame member (21) or second lens shaping element (22), particularly wherein each second actuator (23a, 23b) is independently adjustable, particularly wherein the portions vary in location with respect to a position along the perimeter of the second frame member (21).

8. Lens according to one of the claims 4 to 7, wherein the second frame member is non-circular, particularly non-round, particularly wherein the second lens shaping element is non-circular, particularly non-round, particularly wherein the second frame member has the same shape or a scaled shape of the first frame member.

9. Lens according to one of the preceding claims, wherein the lens is configured to adjust the one or more optical properties are adjusted partially by the shape of first refractive surface of the first membrane and the second refractive surface by the second membrane, wherein
the lens is configured such that the first membrane and the second membrane contribute to the sphere power of the lens partially particularly by an equal contribution,
such that the sphere power invoked by the shape of the first refractive surface and the sphere power invoked by the shape of the second refractive surface combined provide the sphere power the lens is to be adjusted for and/or

the lens is configured such that the first membrane and the second membrane both contribute to the cylinder power and/or the cylinder axis partially, such that the cylinder power and/or axis invoked by the shape of the first refractive surface and the cylinder power and/or cylinder axis invoked by the shape of the second refractive surface combined provide the cylinder power and/or axis the lens is to be adjusted for and/or

the lens is configured such that the first membrane and the second membrane both contribute to the prism power and/or the prism axis partially, such that the prism power and/or prism axis invoked by the shape of the first refractive surface and the prism power and/or prism axis invoked by the shape of the second refractive surface combined provide the prism power and/or prism axis the lens is to be adjusted for.

10. Lens according to one of the claims 1 to 8, wherein the lens is configured such that the sphere power is adjusted solely by the shape of the first refractive surface and wherein the second refractive surface does not adjust for sphere power, or vice versa and/or

the lens is configured such that the cylinder power and the cylinder axis is adjusted solely by the shape of the first refractive surface and wherein the second refractive surface does not adjust for cylinder power, or vice versa. and/or

the lens is configured such that the prism power and the prism axis is adjusted solely by the shape of the first refractive surface and wherein the second refractive surface does not adjust for prism power, or vice versa.

11. Lens according to one of the preceding claims, wherein the first refractive surface is arranged to form, particularly in addition to other optical property adjustments, such as sphere or prism, a first cylinder power along a first cylinder axis and wherein the second refractive surface is arranged to form, particularly in addition to other optical property adjustments, such as sphere or prism, a second cylinder power along a second cylinder axis, such that the combined cylinder power and combined cylinder axis of the first and the second refractive surface provide the cylinder power and axis the lens is to be adjusted to.

12. Lens according to one of the preceding claims, wherein the first refractive surface is arranged to form, particularly in addition to other optical property adjustments, such as sphere or cylinder, a first prism power along a first prism axis and wherein the second refractive surface is arranged to form, particularly in addition to other optical property adjustments, such as sphere or cylinder, a second prism power along a second prism axis, such that the combined prism power and combined prism axis of the first and the second refractive surface provide the prism power and prism axis the lens is to be adjusted to.

13. Lens according to one of the preceding claims, wherein the lens is configured to adjust the shape of the first refractive surface only with respect to sphere power and wherein the lens is further configured to adjust the shape of the second refractive surface only with respect to cylinder power and/or cylinder axis, or vice versa.

14. Lens according to one of the preceding claims wherein the first and the second actuator system is mechanically coupled such that any actuation of the first actuation system invokes change of the second actuation system.

15. Lens according to one of the preceding claims, wherein the first membrane or the second membrane is arranged to solely adjust optical sphere power,

the first or the second shaping element surrounds an optically active region of the first or second membrane,

the first or second shaping element is arranged to alter optical properties of the lens by deflection,

in top view the first or second shaping element has a non-circular contour,

wherein the contour extends within an imaginary circumcircle, and

the amount of deflection of the first or second shaping element is proportional to a lateral distance of the contour to the circumcircle.

16. Method for adjusting one or more optical properties of the lens according to one of the preceding claims, the method comprising the steps of:

- Adjusting the first actuator system such that the shape of the first and/or the second refractive surface is adjusted such that the one or more optical properties is provided by the lens, wherein one or more of the following optical properties are adjusted by the lens:

- a cylinder power and/or a cylinder axis,
- a spherical power,
- a prism power and/or a prism axis.

17. Method according to the preceding claim, wherein the first refractive surface forms, particularly in addition to other optical property adjustments, such as sphere or prism, a first cylinder power along a first cylinder axis and wherein the second refractive surface forms, particularly in addition to other optical property adjustments, such as sphere or prism, a second cylinder power along a second cylinder axis, such that the combined cylinder power and combined cylinder axis of the first and the second refractive surface provide the cylinder power and cylinder axis the lens is to be adjusted to.

18. Method according to one of the preceding claims, wherein the shape of the first refractive surface is adjusted only with respect to sphere power and wherein the lens is further configured to adjust the shape of the second refractive surface only with respect to cylinder power and/or cylinder axis.

19. Method according to one of the preceding claims, wherein the first and/or the second actuator system each comprise at least one actuator configured to control one of the optical properties, which can be used to generate two differing pressures in the first and the second lens volume, such as a gauge pressure for the first or the second membrane, wherein the first and/or the second lens shaping element are rigid and coupled to the container, by means of at least one spring element, wherein the spring elements generating the pressure of the first lens volume and the spring elements generating the pressure for the second lens volume have different spring constants and/or different initial compression/extension.

Fig. 1

FC, 11   FC, 21

1

30

10

100

20

VC, V1, L1

VC, V2, L2

y

z

4

Fig. 2

A)          B)          C)          D)

101   102 101   102 101   102 101 102

1

10

VC, V1, L1                                          VC, V1, L1

30                                                    20

VC, V2, L2                                          100

20

y                                    10 mm

z                                                    10

                                                   VC, V2, L2

FC, 11    FC, 11    FC, 11    FC, 11              1

      FC, 21    FC, 21    FC, 21    FC, 21

Fig. 3

## Fig. 4

Springs have stiffness k1,k2 and initial lengths L1_0 and L2_0 and equilibrium lengths L1, L2, wherein a distance between the first and the second lens shaping element is depicted with x and x'
Pressure in first and second liquid chamber p1 and p2

Specifically an equilibrium state of L1>L10 (first lens volume overfilled) and L2<L20 (second lens volume underfilled) would generate a positive offset in gauge pressure from inside to outside making the inner surface concave and the outer surface convex in the equilibrium state. Compressing the complete core assembly (making x smaller) would then result in a compression of each sub core relative to the stiffness ratio k1/k2 as well as relative to the stiffness ratio of the membranes. This would then produce a change in surface deflection for each core, from the equilibrium case.

Fig. 5

Fig. 6

1

13, 13b     12     VC, V1, L1

13, 13a

11, FC

30

21, FC

23, 23b   VC, V2, L2     23, 23a

22

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013143630 A

- DE 102020134753

**Non-patent literature cited in the description**

- **SHEPLOAK, M. ; DUGUNDJI, J.** Large deflections of clamped circular plates under initial tension and transitions to membrane behavior. *Journal of Applied Mechanics,* 1998, vol. 65 (1), 107-115